# EUROPEAN PATENT SPECIFICATION

(11) **EP 2 670 183 B1**
(45) Date of publication and mention of the grant of the patent: **27.05.2020**
(21) Application number: 11857177.7
(22) Date of filing: 21.10.2011
(51) Int. Cl.: H04W 24/00

(54) **METHOD AND DEVICE FOR PROCESSING CELL INFORMATION IN ENHANCED FORWARD ACCESS CHANNEL STATE**
VERFAHREN UND VORRICHTUNG ZUR VERARBEITUNG VON ZELLENINFORMATIONEN IN EINEM ERWEITERTEN VORWÄRTSZUGANGSKANALZUSTAND
PROCÉDÉ ET DISPOSITIF POUR TRAITER DES DONNÉES DE CELLULE DANS UN ÉTAT DE CANAL DE TRANSPORT DE RÉSEAU VERS MOBILE AMÉLIORÉ

(30) Priority: 28.01.2011 CN 201110031323
(43) Date of publication of application: 04.12.2013
(73) Proprietor: ZTE Corporation, Shenzhen, Guangdong 518057 (CN)
(72) Inventor: WEI, Yuzhen, Shenzhen Guangdong 518057 (CN)
(74) Representative: Lavoix
(86) International application number: PCT/CN2011/081145
(87) International publication number: WO 2012/100568

(56) References cited:
- CN-A- 101 500 215
- CN-A- 101 600 221
- CN-A- 101 754 251
- CN-A- 101 841 868
- CN-A- 101 841 868
- "Universal Mobile Telecommunications System (UMTS); Radio Resource Control (RRC); Protocol specification (3GPP TS 25.331 version 9.4.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V9.4.0, 1 October 2010 (2010-10-01), XP014061535,

## Description

### TECHNICAL FIELD

The disclosure relates to technology for a terminal in an Enhanced Forward Access Channel (E-FACH) state to process system information and a measurement control message, and in particular to a method and device for processing cell information in the E-FACH state.

### BACKGROUND

In a Time Division Duplexing-Synchronous Code Division Multiple Access (TDD-SCDMA) system without an E-FACH, a terminal can only work in a main carrier frequency in a Forward Access Channel (FACH) state and can only perform cell re-selection related evaluation for the same frequency or different frequencies instead, but will not perform measurement criterion related evaluation. The terminal in the FACH state will monitor neighbor cells constantly and perform evaluation on neighbor cell measurement according to signal conditions of a serving cell, so as to select an appropriate neighbor cell when there is a better neighbor cell or signals of the serving cell are weakened. After the E-FACH is introduced, the terminal in an E-FACH state may work in the main carrier frequency, or may also work in a subordinate carrier frequency. In the E-FACH state, not only the cell re-selection related evaluation needs to be performed, but also a measurement control message may be received to perform measuring criterion evaluation and reporting.

For an E-FACH, processing for intra-frequency measurement and inter-frequency measurement after a terminal switches from a Dedicated Channel (DCH) state to an E-FACH state is described in 8.4.1.6.1 and 8.4.1.6.2 of a protocol 25.331a10 of the 3rd Generation Partnership Project (3GPP). Taking the intra-frequency measurement for example, the original description is as follows:
8.4.1.6.1 Intra-frequency measurement

Upon transition from CELL_DCH to CELL_FACH/CELL_PCH/URA_PCH state, the UE shall:
1> stop intra-frequency type measurement reporting;
1> if the transition is due to a reconfiguration message which included the IE "Primary CPICH info" (for FDD) or "Primary CCPCH info" (for TDD), and the UE selects a cell other than that indicated by this IE on the current frequency (in case the IE "Frequency info" is not received) or other than that indicated by this IE on the frequency indicated by the IE "Frequency info" (when the IE "Frequency info" is included); or
1> if the transition is due to a reconfiguration message which does not include the IE "Primary CPICH info" (for FDD) or "Primary CCPCH info" (for TDD); or
1> if the transition is not due to a reconfiguration message:
2> delete the measurements of type intra-frequency associated with the variable MEASUREMENT_IDENTITY.
1> begin monitoring cells listed in the IE "intra-frequency cell info list" received in System Information Block type 12 (or System Information Block type 11, according to subclause 8.1.1.6.11).
1> for 1.28 Mcps TDD, if after state transition the UE enters CELL_FACH state and is working on the secondary frequency:
2> if the cell in which the UE transited from CELL_DCH state is not included in the active set for the CELL_FACH state; or
2> if the working frequency changes after the state transition:
3> the measurement shall be started when a MEASUREMENT CONTROL message is received with the measurements of type intra-frequency.

It can be seen from the above-mentioned protocol description that a terminal in the E-FACH state, whether working in a main carrier frequency or working in a subordinate carrier frequency, has to monitor a cell information list in system information 11/12 (SIB11/12). In addition, if working in the subordinate carrier frequency, the terminal, when switching out of a DCH, will receive an intra-frequency measurement control message to perform measurement evaluation when a cell or a working frequency point changes.

According to an existing protocol, after receiving the measurement control message, the terminal may be unable to process the measurement control message due to understanding ambiguity. More specifically, in the E-FACH state, since the system information are monitored without discriminating a current working frequency point, all neighbor relations broadcast by the system information take the main carrier frequency for reference at the moment if the terminal works in the subordinate carrier frequency, while all frequency points delivered by the measurement control message take the subordinate carrier frequency for reference. Definitions of cell intra-frequency and cell inter-frequency are based on a certain frequency point. If criterions are different, neighbor relations will be different naturally. Therefore, the terminal will be unable to determine the neighbor relation according to the received measurement control message, thus failing to store cell information. Actually, delivery of cell information of the two different criterions above will result in disorder of terminal neighbor cell information storage.

Additionally, according to the existing protocol, the terminal needs to start measurement after receiving the measurement control message if the cell or the working frequency point changes. However, on the basis of the above analysis, the terminal cannot determine at present whether measurement indication in the measurement control message is for measurement evaluation or re-selection, or for both of them at the same time. Nevertheless, when the terminal works in a subordinate carrier frequency in the FACH state at the moment, there is also the problem whether the system information needs to be monitored to perform evaluation on cell re-selection. In other words, when a network side understands that the terminal does not need to wait for measurement control and thereby does not send the measurement control message while the terminal understands that it needs to wait for the measurement control and thereby does not initiate re-selection evaluation, the terminal will not monitor neighbor cells and will not monitor signal conditions of a serving cell, thus the terminal will be disconnected or will lose coverage, or fails to select a better neighbor cell at an appropriate time.

CN 101841868A discloses a method for acquiring a neighboring cell list, which comprises the step that: a terminal in the state of CELL_FACH judges whether the own working carrier frequency is an auxiliary carrier frequency, and if so, the neighboring cell list in a received designated signaling is extracted and saved. The received designated signaling is a measurement control message, or a reconfigured message.

### SUMMARY

In view of this, a main purpose of the disclosure is to provide a method and device for processing cell information in an E-FACH state so as to realize a good supplement to an existing protocol, thus overcoming the fault that a neighbor cell is unable to be updated or the failure or nonfeasance that a cell cannot be re-selected due to inconsistent understanding of a terminal in the E-FACH state with a network side.

The present invention is defined by the appended claims.

In the disclosure, when monitoring the system information and the measurement control message, the terminal will perform corresponding processing on the system information and the measurement control message according to the state of a current working carrier frequency, that is, the terminal will update a neighbor cell list by different methods according to the state of the current working frequency of the terminal, and applies different methods for measurement control criterion evaluation and cell re-selection evaluation based on neighbor cell list information. Specifically, when the current working carrier frequency of the terminal is a subordinate carrier frequency, the terminal may establish a neighbor cell list for the terminal itself according to cell information in the system information after receiving the system information; or the terminal does not need to establish a neighbor cell list according to the received system information, but waits for receiving a measurement control message and establishes the neighbor cell list of the terminal according to the measurement control message; or the terminal establishes a terminal neighbor cell list according to the cell information in the system information first, and updates the neighbor cell list of the terminal according to the received measurement control message. The disclosure is a very good supplement to a method in an existing protocol for the terminal in the E-FACH state to process the system information and the measurement control message, thus overcoming a neighbor re-selection error or the fault that the neighbor cell is unable to be re-selected because the neighbor cell list cannot be updated or the neighbor cell list is updated wrongly. The disclosure well ensures service quality of the terminal and improves user experience.

### BRIEF DESCRIPTION OF THE DRAWINGS

Fig. 1 is a flowchart of the first embodiment of a method for processing cell information in an E-FACH state according to the disclosure;
Fig. 2 is a flowchart of the second embodiment of the method for processing cell information in an E-FACH state according to the disclosure;
Fig. 3 is a schematic diagram illustrating a composition structure of a first device for processing cell information in an E-FACH state according to an embodiment of the disclosure;
Fig. 4 is a schematic diagram illustrating a composition structure of a second device for processing cell information in an E-FACH state according to an embodiment of the disclosure;
Fig. 5 is a schematic diagram illustrating a composition structure of a third device for processing cell information in an E-FACH state according to an embodiment of the disclosure; and
Fig. 6 is a schematic diagram illustrating a composition structure of a first device for processing cell information in an E-FACH state according to an embodiment of the disclosure.

### DETAILED DESCRIPTION

The basic idea of the embodiments of the disclosure is: when a terminal in an E-FACH state determines that a working carrier frequency thereof is a subordinate carrier frequency, the terminal may establish a neighbor cell list for the terminal itself according to cell information in system information after receiving the system information; specifically, the terminal adds an inter-frequency cell having the same working frequency point in the system information to a local intra-frequency neighbor cell list while adding a cell with a different working frequency point in an inter-frequency list of the system information and an intra-frequency cell in the system information to a local inter-frequency list, or the terminal waits for receiving a measurement control message and establishes the neighbor cell list of the terminal according to the measurement control message instead of establishing the neighbor cell list according to the received system information, or the terminal establishes the neighbor cell list of the terminal according to the cell information in the system information first, and updates the neighbor cell list of the terminal according to a received measurement control message; however, when the terminal in the E-FACH state determines that the working carrier frequency thereof is a main carrier frequency, the terminal uses the cell information in the received system information as the neighbor cell list for the terminal itself.

To make the purpose, technical solution and advantages of the disclosure clearer, the disclosure will be further described in details below through the embodiments and with reference to the accompanying drawings.

It needs to be noted that the disclosure aims at processing a measurement control message and system information in an E-FACH system. Therefore, all following embodiments of the disclosure are directed at processing methods of the E-FACH system, and will not be described one by one hereinafter.

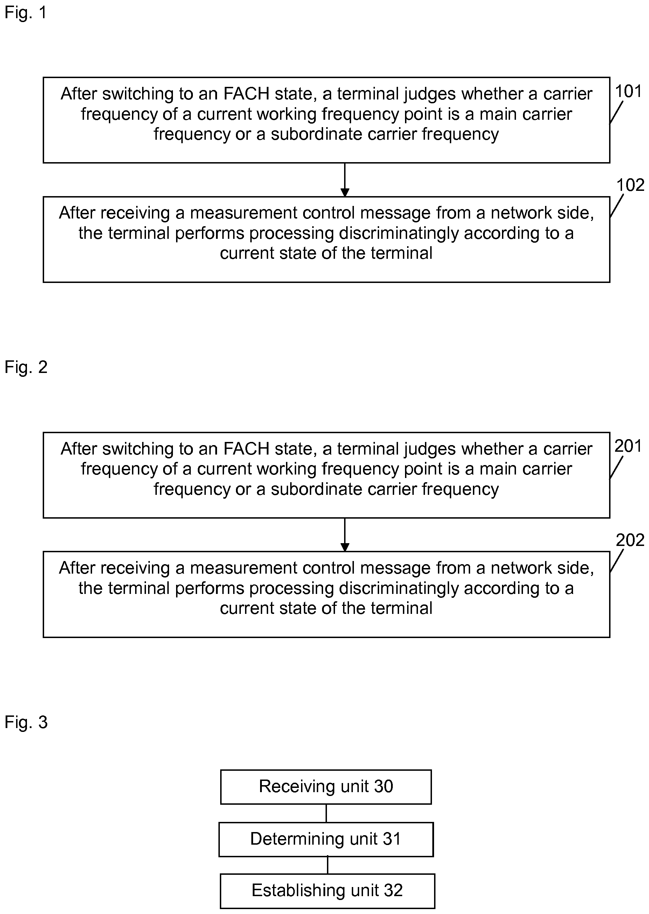

Fig. 1 is a flowchart of the first embodiment of a method for processing cell information in an E-FACH state according to the disclosure. As shown in Fig. 1, the method for processing cell information in an E-FACH state according to the disclosure specifically includes the following steps:
Step 101: after switching to an FACH state, a terminal judges whether a carrier frequency of a current working frequency point is a main carrier frequency or a subordinate carrier frequency.

When working in the main carrier frequency, the terminal monitors system information, reads neighbor cell information of a current serving cell from the system information, and updates the neighbor cell information locally, that is, the terminal establishes a local neighbor cell list, adds an intra-frequency cell in the system information to an intra-frequency neighbor cell list, and adds an inter-frequency cell in the system information to an inter-frequency neighbor cell list. Subsequently, the terminal performs evaluation according to a measurement result of the serving cell, and starts neighbor cell measurement after a neighbor cell monitoring criterion is satisfied. In the present embodiment, if the terminal works in a subordinate carrier frequency, the terminal may not establish the neighbor cell list using the received system information after receiving the system information, mainly because the neighbor cell information is determined in the system information of a system side by taking a main carrier frequency as a reference object, and at the moment for the terminal whose working carrier frequency is the subordinate carrier frequency, an intra-frequency neighbor cell in the system information is an inter-frequency cell of the terminal actually. Therefore, cell information in the system information cannot be directly used as neighbor cell information of the terminal that takes the subordinate carrier frequency as the working carrier frequency.

Step 102: after receiving a measurement control message from a network side, the terminal performs processing discriminatingly according to a current state of the terminal.

After receiving the measurement control message, the terminal stores the measurement control message if determining that the terminal works in a main carrier frequency, but does not update a cell information list. At the moment, the terminal still performs cell re-selection related evaluation, and does not perform measurement criterion related evaluation and reporting. Information carried by the measurement control message is merely used for performing the measurement criterion related evaluation after the terminal switches to a DCH state. Here, after receiving the system information, the terminal will further receive a measurement control message from the network side. In this way, after receiving the measurement control message from the network side, the terminal working in the main carrier frequency will not update the neighbor cell list again by using the cell information in the measurement control message, because this will result in a repeated operation for the terminal to update the neighbor cell list.

In the present embodiment, when determining that the terminal works in a subordinate carrier frequency, the terminal does not read related cell information in the system information, but establishes the neighbor cell list using the cell information in the received measurement control message after receiving the measurement control message. The terminal continues to wait for a measurement control message, and establishes a local neighbor cell list according to cell information in the measurement control message after receiving the measurement control message, and performs evaluation according to the measurement result of the serving cell, and starts the neighbor cell measurement if the neighbor cell monitoring criterion is satisfied, and performs the cell re-selection related evaluation. At the same time, the terminal will perform the measurement criterion related evaluation according to a criterion carried in the measurement control message, performs measurement reporting after a measurement criterion is satisfied, and notifies the network side. Establishing the local neighbor cell list according to the measurement control message specifically includes: adding the intra-frequency cell in the measurement control message to the intra-frequency neighbor cell list directly while adding the inter-frequency cell in the measurement control message to the inter-frequency neighbor cell list directly. In other words, the cell information in the measurement control message determines the neighbor cell information by using the working carrier frequency of the terminal as the reference object.

In the disclosure, when working in a subordinate carrier frequency, the terminal may also not perform the cell re-selection related evaluation, and only performs the measurement criterion related evaluation and performs the measurement reporting after the measurement criterion is satisfied. Then in this case, the terminal lacks a self-monitoring mode, that is, if the terminal does not start the re-selection related evaluation, the terminal will be unable to re-select a cell with strong signals in a model autonomously in first time, but can perform cell re-selection only after waiting for a decision of the network side, which will influence cell re-selection of the terminal.

Fig. 2 is a flowchart of the second embodiment of a method for processing cell information in an E-FACH state according to the disclosure. As shown in Fig. 2, the method for processing cell information in an E-FACH state according to the disclosure specifically includes the following steps:
Step 201: after switching to an FACH state, a terminal judges whether a carrier frequency of a current working frequency point is a main carrier frequency or a subordinate carrier frequency.

When working in a main carrier frequency, the terminal monitors system information, reads neighbor cell information of a current serving cell from the system information, and updates the neighbor cell information locally, that is, the terminal establishes a local neighbor cell list, adds an intra-frequency cell in the system information to an intra-frequency neighbor cell list, and adds an inter-frequency cell in the system information to an inter-frequency neighbor cell list. Subsequently, the terminal performs evaluation according to a measurement result of the serving cell, and starts neighbor cell measurement after a neighbor cell monitoring criterion is satisfied. If the terminal works in a subordinate carrier frequency, the terminal establishes the neighbor cell list according to the neighbor cell information in the system information after receiving the system information. Specifically, after receiving the system information, the terminal adds an inter-frequency cell having the same working frequency point in the system information to a local intra-frequency neighbor cell list while adding a cell having a different working frequency point in an inter-frequency list of the system information and an intra-frequency cell in the system information to a local inter-frequency list. In the present embodiment, when working in a subordinate carrier frequency, the terminal uses the system information to establish the neighbor cell list.

In the present embodiment, the terminal updates the neighbor cell list according to cell information in the system information when working in the subordinate carrier frequency. However, the terminal needs to perform corresponding processing on the neighbor cell information in the system information at the moment to establish the neighbor cell list, and cannot perform the processing according to related descriptions in clause 8.6.7.3 Intra-frequency/lnter-frequency/lnter-RAT cell info list of an existing protocol 3GPP 25.331. Whether the terminal works in the main carrier frequency or in the subordinate carrier frequency, frequency points of neighbor cells carried in the system information all are aimed at the main carrier frequency. Whether the terminal works in the main carrier frequency or the subordinate carrier frequency of the current serving cell, relative relations between these neighbor cells and the serving cell are unchanged substantially, and only a relation between intra-frequency and inter-frequency changes. First, the terminal determines the relation between the current working frequency point and the inter-frequency cell in the inter-frequency list. If the inter-frequency list has a cell having the same frequency point, the terminal adds the cell to the intra-frequency list. If the cell has a different frequency point, then the terminal adds the cell to the inter-frequency list. The intra-frequency list in the system information is adjusted into the local inter-frequency list. In this way, when the terminal works in the subordinate carrier frequency in the E-FACH state, even if a network side does not deliver intra-frequency and inter-frequency measurement control, the terminal can also start monitoring evaluation for a neighbor cell and is able to initiate re-selection in time when service quality is worsened or when there is a better neighbor cell.

Step 202: after receiving a measurement control message from a network side, the terminal performs processing discriminatingly according to a current state of the terminal.

After receiving the measurement control message, the terminal stores the measurement control message if determining that the terminal works in a main carrier frequency, but does not update a cell information list. At the moment, the terminal still performs cell re-selection related evaluation, and does not perform measurement criterion related evaluation and reporting. Information carried by the measurement control message is merely used for performing the measurement criterion related evaluation after the terminal switches to a DCH state. Here, after receiving the system information, the terminal will further receive a measurement control message from the network side. In this way, after receiving the measurement control message from the network side, the terminal working in the main carrier frequency will not update the neighbor cell list again by using the cell information in the measurement control message, because this will result in a repeated operation for the terminal to update the neighbor cell list.

In the present embodiment, when determining that the terminal works in a subordinate carrier frequency, the terminal will perform evaluation according to the measurement result of the serving cell after receiving the measurement control message, starts the neighbor cell measurement after the neighbor cell monitoring criterion is satisfied, and performs the cell re-selection related evaluation. At the same time, the terminal will perform the measurement criterion related evaluation according to a criterion carried in the measurement control message, performs measurement reporting after a measurement criterion is satisfied, and notifies the network side. At the moment, since the terminal has established the neighbor cell list according to the cell information in the system information, the cell re-selection evaluation will not be affected even if there is no measurement control message received subsequently.

Of course, as an implementation method, after receiving the measurement control message, the terminal may also update the current neighbor cell list using the received measurement control message. Specifically, the terminal re-establishes a neighbor cell list using the cell information in the received measurement control message to replace a previously-established neighbor cell list. In other words, the local intra-frequency neighbor cell list is replaced with intra-frequency cells in the measurement control message while a local inter-frequency neighbor cell list is replaced by inter-frequency cells in the measurement control message, which corresponds to re-establishment of the neighbor cell list of the terminal by using the measurement control message.

As an implementation method, after receiving the measurement control message, the terminal may also update an intra-frequency cell in the cell information of the received system information to an established intra-frequency neighbor cell list, and update an inter-frequency cell in the cell information in the received measurement control information to an established inter-frequency neighbor cell list. Here, the so-called updating refers to adding a cell, which is not included in a local neighbor cell list in the cell information of the measurement control message, to a corresponding inter-frequency or intra-frequency neighbor cell list.

In the disclosure, when working in the subordinate carrier frequency, the terminal may also not perform the cell re-selection related evaluation, and only performs the measurement criterion related evaluation and performs the measurement reporting after the measurement criterion is satisfied. Then in this case, the terminal lacks a self-monitoring mode, that is, if the terminal does not start the re-selection related evaluation, the terminal will be unable to re-select a cell with strong signals in a model autonomously in first time, but can perform cell re-selection only after waiting for a decision of the network side, which will influence cell re-selection of the terminal.

Fig. 3 is a schematic diagram illustrating a composition structure of a first device for processing cell information in an E-FACH state in an embodiment according to the disclosure. As shown in Fig. 3, the device for processing cell information in an E-FACH state according to the present embodiment includes: a receiving unit 30, a determining unit 31 and an establishing unit 32, wherein
the receiving unit 31 is configured to receive system information from a network side;
the determining unit is configured to trigger the establishing unit 32 when determining that a working carrier frequency of a terminal in the E-FACH state is a subordinate carrier frequency; and
the establishing unit 32 is configured to establish a neighbor cell list of the terminal using cell information in the system information received by the receiving unit.

The above-mentioned establishing unit 32 is further configured to add an intra-frequency cell in the cell information of the system information to an inter-frequency neighbor cell list of the terminal, add a cell having the same working frequency as that of the terminal in inter-frequency cells in the cell information of the system information to an intra-frequency neighbor cell list of the terminal, and add a cell having a different working frequency from that of the terminal in the inter-frequency cells to the inter-frequency neighbor cell list of the terminal.

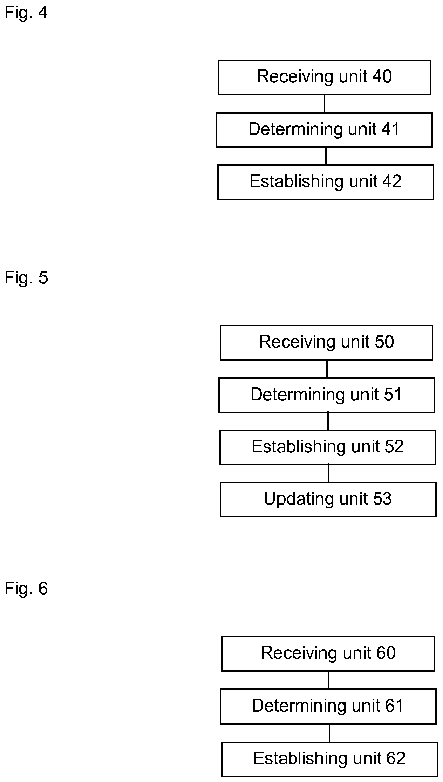

Fig. 4 is a schematic diagram illustrating a composition structure of a second device for processing cell information in an E-FACH state according to an embodiment of the disclosure. As shown in Fig. 4, the device for processing cell information in an E-FACH state according to the present embodiment includes: a receiving unit 40, a determining unit 41 and an establishing unit 42, wherein
the receiving unit 40 is configured to receive a measurement control message from a network side;
the determining unit 41 is configured to trigger the establishing unit 42 when determining that a working carrier frequency of a terminal in the E-FACH state is a subordinate carrier frequency; and
the establishing unit 42 is configured to establish a neighbor cell list using the measurement control message received by the receiving unit.

Fig. 5 is a schematic diagram illustrating a composition structure of a third device for processing cell information in an E-FACH state according to an embodiment of the disclosure. As shown in Fig. 5, the device for processing cell information in an E-FACH state according to the present embodiment includes: a receiving unit 50, a determining unit 51, an establishing unit 52 and an updating unit 53, wherein
the receiving unit 50 is configured to receive system information and a measurement control message from a network side;
the determining unit 51 is configured to trigger the establishing unit 52 when determining that a working carrier frequency of a terminal in the E-FACH state is a subordinate carrier frequency;
the establishing unit 52 is configured to establish a neighbor cell list of the terminal using cell information in the system information received by the receiving unit; and
the updating unit 53 is configured to update the established neighbor cell list according to cell information in the measurement control message received by the receiving unit.

The above-mentioned updating unit 53 is further configured to re-establish a neighbor cell list using the cell information in the measurement control message received by the receiving unit 50 to replace the previously-established neighbor cell list.

Alternatively, the above-mentioned updating unit 53 is further configured to update an intra-frequency cell in the cell information in the measurement control message received by the receiving unit 50 to an established intra-frequency neighbor cell list, and update an inter-frequency cell in the cell information in the received measurement control message to an established inter-frequency neighbor cell list.

Fig. 6 is a schematic diagram illustrating a composition structure of a four device for processing cell information in an E-FACH state according to an embodiment of the disclosure. As shown in Fig. 6, the device for processing cell information in an E-FACH state according to the present embodiment includes: a receiving unit 60, a determining unit 61 and an establishing unit, wherein
the receiving unit 60 is configured to receive system information and a measurement control message from a network side;
the determining unit 61 is configured to trigger the establishing unit 62 when determining that a working carrier frequency of a terminal in the E-FACH state is a main carrier frequency; and
the establishing unit 62 is configured to use cell information in the system information received by the above-mentioned receiving unit 60 as a neighbor cell list of itself.

Those skilled in the art should understand that the devices for processing cell information in an E-FACH state shown in Fig. 3 to Fig. 6 are designed for implementing the aforementioned method for processing cell information in an E-FACH state. Functions of all processing units in the devices for processing cell information in an E-FACH state shown in Fig. 3 to Fig. 6 may be understood by reference to the description of the aforementioned method. The functions of all the processing units may be implemented by a program running on a processor, or may be also implemented by a specific logic circuit.

The above are only preferred embodiments of the disclosure and are not intended to limit the scope of protection of the disclosure.

## Claims

1. A method for processing cell information in an Enhanced Forward Access Channel, E-FACH, state, implemented in a terminal and comprising:
(101) when the terminal in an E-FACH state determines that a working carrier frequency thereof is a subordinate carrier frequency,
establishing a neighbor cell list for the terminal itself using cell information in received system information; or
establishing a neighbor cell list for the terminal itself using cell information in received system information, and updating the established neighbor cell list according to cell information in a received measurement control message,
wherein the step of establishing the neighbor cell list for the terminal itself using the cell information in the received system information comprises:
adding, by the terminal, an intra-frequency cell in the cell information of the system information to an inter-frequency neighbor cell list of the terminal, adding, by the terminal, a cell having a same working frequency as that of the terminal itself in inter-frequency cells in the cell information of the system information to an intra-frequency neighbor cell list of the terminal itself, and adding, by the terminal, a cell having a different working frequency from that of the terminal itself in the inter-frequency cells to the inter-frequency neighbor cell list of the terminal itself.

2. The method according to claim 1, further comprising:
performing, by the terminal, neighbor cell evaluation according to a measurement result of a serving cell, and starting, by the terminal, neighbor cell measurement after a neighbor cell monitoring criterion is satisfied.

3. The method according to claim 1, further comprising:
performing, by the terminal, neighbor cell evaluation according to a measurement result of a serving cell, starting, by the terminal, neighbor cell measurement after a neighbor cell monitoring criterion is satisfied, and performing, by the terminal, measurement criterion related evaluation.

4. The method according to claim 1, further comprising:
using, by the terminal in the E-FACH state, the cell information in received system information as the neighbor cell list of the terminal itself when the terminal determines that the working carrier frequency thereof is a main carrier frequency.

5. A device for processing cell information in an Enhanced Forward Access Channel, E-FACH, state, comprising: a receiving unit (30), a determining unit (31) and an establishing unit (32), wherein
the receiving unit (30) is configured to receive system information from a network side;
the determining unit (31) is configured to trigger the establishing unit when determining that a working carrier frequency of a terminal in an E-FACH state is a subordinate carrier frequency; and
the establishing unit (32) is configured to establish a neighbor cell list of the terminal using cell information in the system information received by the receiving unit,
wherein the establishing unit (32) is further configured to add an intra-frequency cell in the cell information of the system information to an inter-frequency neighbor cell list of the terminal, add a cell having a same working frequency as that of the terminal in inter-frequency cells in the cell information of the system information to an intra-frequency neighbor cell list of the terminal, and add a cell having a different working frequency from that of the terminal in the inter-frequency cells to the inter-frequency neighbor cell list of the terminal.

6. A device for processing cell information in an Enhanced Forward Access Channel, E-FACH, state, comprising: a receiving unit (50), a determining unit (51), an establishing unit (52) and an updating unit (53), wherein
the receiving unit (50) is configured to receive system information and a measurement control message from a network side;
the determining unit (51) is configured to trigger the establishing unit when determining that a working carrier frequency of a terminal in an E-FACH state is a subordinate carrier frequency;
the establishing unit (52) is configured to establish a neighbor cell list of the terminal using cell information in the system information received by the receiving unit; and
the updating unit (53) is configured to update the established neighbor cell list according to cell information in the measurement control message received by the receiving unit,
wherein the establishing unit (52) is further configured to add an intra-frequency cell in the cell information of the system information to an inter-frequency neighbor cell list of the terminal, add a cell having a same working frequency as that of the terminal in inter-frequency cells in the cell information of the system information to an intra-frequency neighbor cell list of the terminal, and add a cell having a different working frequency from that of the terminal in the inter-frequency cells to the inter-frequency neighbor cell list of the terminal.

7. The device according to claim 6, wherein the updating unit (53) is further configured to:
re-establish a neighbor cell list using the cell information in the measurement control message received by the receiving unit to replace the previously-established neighbor cell list.

8. The device according to claim 6, wherein the updating unit (53) is further configured to update an intra-frequency cell in the cell information in the measurement control message received by the receiving unit to an established intra-frequency neighbor cell list, and update an inter-frequency cell in the cell information in the received measurement control message to an established inter-frequency neighbor cell list.

9. The device according to claim 6, wherein
the determining unit (51) is further configured to trigger the updating unit when determining that the working carrier frequency of the terminal in the E-FACH state is a main carrier frequency; and
the establishing unit (52) is further configured to use the cell information in the system information received by the receiving unit as the neighbor cell list of itself.

## Patentansprüche

1. Verfahren zur Verarbeitung von Zellinformationen in einem erweiterten Vorwärtszugangskanal (Enhanced Forward Access Channel), E-FACH, -Zustand, implementiert in einem Endgerät und umfassend:
(101) wenn das Endgerät in einem E-FACH-Zustand bestimmt, dass eine Arbeitsträgerfrequenz davon eine untergeordnete Trägerfrequenz ist,
Aufbauen einer Nachbarzellliste für das Endgerät selbst unter Verwendung von Zellinformationen in erhaltener Systeminformation; oder
Aufbauen einer Nachbarzellliste für das Endgerät selbst unter Verwendung von Zellinformationen in der erhaltenen Systeminformation und Aktualisieren der aufgebauten Nachbarzellliste gemäß Zellinformationen in einer erhaltenen Messsteuerungsnachricht,
wobei der Schritt des Aufbauens der Nachbarzellliste für das Endgerät selbst unter Verwendung der Zellinformationen in der erhalten Systeminformation Folgendes umfasst:
Addieren, durch das Endgerät, einer Intrafrequenzzelle in den Zellinformationen der Systeminformation zu einer Interfrequenz-Nachbarzellliste des Endgeräts, Addieren, durch das Endgerät, einer Zelle mit einer gleichen Arbeitsfrequenz wie derjenigen des Endgeräts selbst in Interfrequenzzellen in den Zellinformationen der Systeminformation zu einer Intrafrequenz-Nachbarzellliste des Endgeräts selbst und Addieren, durch das Endgerät, einer Zelle mit einer verschiedenen Arbeitsfrequenz als derjenigen des Endgeräts selbst in den Interfrequenzzellen zur Interfrequenz-Nachbarzellliste des Endgeräts selbst.

2. Verfahren nach Anspruch 1, weiter umfassend:
Durchführen, durch das Endgerät, einer Nachbarzell-Bewertung gemäß einem Messergebnis einer versorgenden Zelle und Beginnen, durch das Endgerät, der Nachbarzellmessung, nachdem ein Nachbarzell-Überwachungskriterium erfüllt ist.

3. Verfahren nach Anspruch 1, weiter umfassend:
Durchführen, durch das Endgerät, einer Nachbarzell-Bewertung gemäß einem Messergebnis einer versorgenden Zelle, Beginnen, durch das Endgerät, der Nachbarzellmessung, nachdem ein Nachbarzell-Überwachungskriterium erfüllt ist, und Durchführen, durch das Endgerät, einer Messkriterium-bezogenen Bewertung.

4. Verfahren nach Anspruch 1, weiter umfassend:
Verwenden, durch das Endgerät im E-FACH-Zustand, der Zellinformationen in der erhaltenen Systeminformation als die Nachbarzellliste des Endgeräts selbst, wenn das Endgerät bestimmt, dass die Arbeitsträgerfrequenz davon eine Hauptträgerfrequenz ist.

5. Vorrichtung zur Verarbeitung von Zellinformationen in einem erweiterten Vorwärtszugangskanal (Enhanced Forward Access Channel), E-FACH, -Zustand, umfassend:
eine Empfangseinheit (30), eine Bestimmungseinheit (31) und eine Aufbaueinheit (32), wobei
die Empfangseinheit (30) konfiguriert ist, um Systeminformationen von einer Netzwerkseite zu empfangen;
die Bestimmungseinheit (31) konfiguriert ist, um die Aufbaueinheit auszulösen, wenn bestimmt wird, dass eine Arbeitsträgerfrequenz eines Endgeräts in einem E-FACH-Zustand eine untergeordnete Trägerfrequenz ist; und
die Aufbaueinheit (32) konfiguriert ist, um eine Nachbarzellliste des Endgeräts unter Verwendung von Zellinformationen in der Systeminformation, empfangen von der Empfangseinheit, aufzubauen,
wobei die Aufbaueinheit (32) weiter konfiguriert ist um, eine Intrafrequenzzelle in den Zellinformationen der Systeminformation zu einer Interfrequenz-Nachbarzellliste des Endgeräts zu addieren, eine Zelle mit einer gleichen Arbeitsfrequenz wie derjenigen des Endgeräts in den Interfrequenzzellen in den Zellinformationen des Systeminformation zu einer Intrafrequenz-Nachbarzellliste des Endgeräts zu addieren und eine Zelle mit einer verschiedenen Arbeitsfrequenz als derjenigen des Endgeräts in den Interfrequenzzellen zur Interfrequenz-Nachbarzellliste des Endgeräts zu addieren.

6. Vorrichtung zur Verarbeitung von Zellinformationen in einem erweiterten Vorwärtszugangskanal (Enhanced Forward Access Channel), E-FACH, -Zustand, umfassend:
eine Empfangseinheit (50), eine Bestimmungseinheit (51), eine Aufbaueinheit (52) und eine Aktualisierungseinheit (53), wobei
die Empfangseinheit (50) konfiguriert ist, um Systeminformationen und eine Messsteuerungsnachricht von einer Netzwerkseite zu empfangen;
die Bestimmungseinheit (51) konfiguriert ist, um die Aufbaueinheit auszulösen, wenn bestimmt wird, dass eine Arbeitsträgerfrequenz eines Endgeräts in einem E-FACH-Zustand eine untergeordnete Trägerfrequenz ist;
die Aufbaueinheit (52) konfiguriert ist, um eine Nachbarzellliste des Endgeräts unter Verwendung von Zellinformationen in der Systeminformation, empfangen von der Empfangseinheit, aufzubauen; und
die Aktualisierungseinheit (53) konfiguriert ist, um die aufgebaute Nachbarzellliste gemäß Zellinformationen in der Messsteuerungsnachricht, empfangen von der Empfangseinheit, zu aktualisieren,
wobei die Aufbaueinheit (52) weiter konfiguriert ist, um eine Intrafrequenzzelle in den Zellinformationen der Systeminformation zu einer Interfrequenz-Nachbarzellliste des Endgeräts zu addieren, eine Zelle mit einer gleichen Arbeitsfrequenz wie derjenigen des Endgeräts in Interfrequenzzellen in den Zellinformationen der Systeminformation zu einer Intrafrequenz-Nachbarzellliste des Endgeräts zu addieren und eine Zelle mit einer verschiedenen Arbeitsfrequenz als derjenigen des Endgeräts in den Interfrequenzzellen zur Interfrequenz-Nachbarzellliste des Endgeräts zu addieren.

7. Vorrichtung nach Anspruch 6, wobei die Aktualisierungseinheit (53) weiter konfiguriert ist,
um eine Nachbarzellliste unter Verwendung der Zellinformationen in der Messsteuerungsnachricht, erhalten von der Empfangseinheit, erneut aufzubauen, um die zuvor aufgebaute Nachbarzellliste zu ersetzen.

8. Vorrichtung nach Anspruch 6, wobei die Aktualisierungseinheit (53) weiter konfiguriert ist, um eine Intrafrequenzzelle in den Zellinformationen in der Messsteuerungsnachricht, empfangen von der Empfangseinheit, zu einer Intrafrequenz-Nachbarzellliste zu aktualisieren und eine Interfrequenzzelle in den Zellinformationen in der empfangenen Messsteuerungsnachricht zu einer aufgebauten Interfrequenz-Nachbarzellliste zu aktualisieren.

9. Vorrichtung nach Anspruch 6, wobei
die Bestimmungseinheit (51) weiter konfiguriert ist, um die Aktualisierungseinheit auszulösen, wenn bestimmt wird, dass die Arbeitsträgerfrequenz des Endgeräts im E-FACH-Zustand eine Hauptträgerfrequenz ist; und
die Aufbaueinheit (52) weiter konfiguriert ist, um die Zellinformationen in der Systeminformation, empfangen durch die Empfangseinheit, als die Nachbarzellliste selbst zu verwenden.

## Revendications

1. Procédé de traitement d'informations de cellule dans un état de canal d'accès vers l'avant amélioré (Enhanced Forward Access Channel), E-FACH, mis en oeuvre dans un terminal et comprenant les étapes ci-dessous consistant à :
(101) lorsque le terminal dans un état de canal E-FACH détermine qu'une fréquence porteuse de travail de celui-ci est une fréquence porteuse subordonnée :
établir une liste de cellules voisines pour le terminal lui-même, en utilisant des informations de cellule dans des informations système reçues ; ou
établir une liste de cellules voisines pour le terminal lui-même, en utilisant des informations de cellule dans des informations système reçues, et mettre à jour la liste de cellules voisines établie selon des informations de cellule dans un message de commande de mesure reçu ;
dans lequel l'étape d'établissement de la liste de cellules voisines pour le terminal lui-même, en utilisant les informations de cellule dans les informations système reçues, comprend les étapes ci-dessous consistant à :
ajouter, par le biais du terminal, une cellule intra-fréquence dans les informations de cellule des informations système, à une liste de cellules voisines inter-fréquences du terminal, ajouter, par le biais du terminal, une cellule présentant une même fréquence de travail que celle du terminal lui-même dans des cellules inter-fréquences dans les informations de cellule des informations système, à une liste de cellules voisines intra-fréquences du terminal lui-même, et ajouter, par le biais du terminal, une cellule présentant une fréquence de travail différente de celle du terminal lui-même dans les cellules inter-fréquences, à la liste de cellules voisines inter-fréquences du terminal lui-même.

2. Procédé selon la revendication 1, comprenant en outre les étapes ci-dessous consistant à :
mettre en œuvre, par le biais du terminal, une évaluation de cellule voisine selon un résultat de mesure d'une cellule de desserte, et démarrer, par le biais du terminal, une mesure de cellule voisine après qu'un critère de surveillance de cellule voisine est satisfait.

3. Procédé selon la revendication 1, comprenant en outre les étapes ci-dessous consistant à :
mettre en œuvre, par le biais du terminal, une évaluation de cellule voisine selon un résultat de mesure d'une cellule de desserte, démarrer, par le biais du terminal, une mesure de cellule voisine après qu'un critère de surveillance de cellule voisine est satisfait, et mettre en œuvre, par le biais du terminal, une évaluation connexe au critère de mesure.

4. Procédé selon la revendication 1, comprenant en outre l'étape ci-dessous consistant à :
utiliser, par le biais du terminal dans l'état de canal E-FACH, les informations de cellule dans des informations système reçues sous la forme de la liste de cellules voisines du terminal lui-même lorsque le terminal détermine que la fréquence porteuse de travail de celui-ci est une fréquence porteuse principale.

5. Dispositif destiné à traiter des informations de cellule dans un état de canal d'accès vers l'avant amélioré (Enhanced Forward Access Channel), E-FACH, comprenant : une unité de réception (30), une unité de détermination (31) et une unité d'établissement (32), dans lequel :
l'unité de réception (30) est configurée de manière à recevoir des informations système en provenance d'un côté de réseau ;
l'unité de détermination (31) est configurée de manière à déclencher l'unité d'établissement lorsqu'elle détermine qu'une fréquence porteuse de travail d'un terminal dans un état de canal E-FACH est une fréquence porteuse subordonnée ; et
l'unité d'établissement (32) est configurée de manière à établir une liste de cellules voisines du terminal en utilisant des informations de cellule dans les informations système reçues par l'unité de réception ;
dans lequel l'unité d'établissement (32) est en outre configurée de manière à ajouter une cellule intra-fréquence dans les informations de cellule des informations système, à une liste de cellules voisines inter-fréquences du terminal, à ajouter une cellule présentant une même fréquence de travail que celle du terminal lui-même dans des cellules inter-fréquences dans les informations de cellule des informations système, à une liste de cellules voisines intra-fréquences du terminal, et à ajouter une cellule présentant une fréquence de travail différente de celle du terminal dans les cellules inter-fréquences, à la liste de cellules voisines inter-fréquences du terminal.

6. Dispositif destiné à traiter des informations de cellule dans un état de canal d'accès vers l'avant amélioré (Enhanced Forward Access Channel), E-FACH, comprenant : une unité de réception (50), une unité de détermination (51), une unité d'établissement (52) et une unité de mise à jour (53), dans lequel :
l'unité de réception (50) est configurée de manière à recevoir des informations système et un message de commande de mesure en provenance d'un côté de réseau ;
l'unité de détermination (51) est configurée de manière à déclencher l'unité d'établissement lorsqu'elle détermine qu'une fréquence porteuse de travail d'un terminal dans un état de canal E-FACH est une fréquence porteuse subordonnée ;
l'unité d'établissement (52) est configurée de manière à établir une liste de cellules voisines du terminal en utilisant des informations de cellule dans les informations système reçues par l'unité de réception ; et
l'unité de mise à jour (53) est configurée de manière à mettre à jour la liste de cellules voisines établie selon des informations de cellule dans le message de commande de mesure reçu par l'unité de réception,
dans lequel l'unité d'établissement (52) est en outre configurée de manière à ajouter une cellule intra-fréquence dans les informations de cellule des informations système, à une liste de cellules voisines inter-fréquences du terminal, à ajouter une cellule présentant une même fréquence de travail que celle du terminal lui-même dans des cellules inter-fréquences dans les informations de cellule des informations système, à une liste de cellules voisines intra-fréquences du terminal, et à ajouter une cellule présentant une fréquence de travail différente de celle du terminal dans les cellules inter-fréquences, à la liste de cellules voisines inter-fréquences du terminal.

7. Dispositif selon la revendication 6, dans lequel l'unité de mise à jour (53) est en outre configurée de manière à :
rétablir une liste de cellules voisines en utilisant les informations de cellule dans le message de commande de mesure reçu par l'unité de réception pour remplacer la liste de cellules voisines précédemment établie.

8. Dispositif selon la revendication 6, dans lequel l'unité de mise à jour (53) est en outre configurée de manière à mettre à jour une cellule intra-fréquence dans les informations de cellule dans le message de commande de mesure reçu par l'unité de réception dans une liste de cellules voisines intra-fréquences établie, et mettre à jour une cellule inter-fréquence dans les informations de cellule dans le message de commande de mesure reçu dans une liste de cellules voisines inter-fréquences établie.

9. Dispositif selon la revendication 6, dans lequel :
l'unité de détermination (51) est en outre configurée de manière à déclencher l'unité de mise à jour lorsqu'elle détermine que la fréquence porteuse de travail du terminal dans l'état de canal E-FACH est une fréquence porteuse principale ; et
l'unité d'établissement (52) est en outre configurée de manière à utiliser les informations de cellule dans les informations système reçues par l'unité de réception sous la forme de sa propre liste de cellules voisines.
